# EUROPÄISCHE PATENTSCHRIFT

(11) **EP 1 691 047 B1**
(45) Veröffentlichungstag und Bekanntmachung des Hinweises auf die Patenterteilung: **13.08.2008**
(21) Anmeldenummer: 06000690.5
(22) Anmeldetag: 13.01.2006
(51) Int. Cl.: F01N 3/08, F02M 25/07, F01N 3/10, F02B 37/00

(54) **Abgasreinigungseinrichtung für eine Brennkraftmaschine und Verfahren zum Behandeln von Abgasen einer Brennkraftmaschine**
Exhaust gas cleaning device for a combustion engine and method of treating exhaust gas
Dispositif pour traiter les gaz d'échappement d'un moteur à combustion et méthode pour traiter les gaz d'échappement

(30) Priorität: 15.02.2005 DE 102005006994
(43) Veröffentlichungstag der Anmeldung: 16.08.2006
(73) Patentinhaber: Behr GmbH & Co. KG, 70469 Stuttgart (DE)
(72) Erfinder: Burk, Roland, Dipl.-Phys., 70469 Stuttgart (DE)
(74) Vertreter: Grauel, Andreas

(56) Entgegenhaltungen:
- EP-A- 0 639 400
- EP-A- 0 816 647
- EP-A- 1 437 488
- US-A- 5 647 206
- US-A1- 2001 008 616
- US-B1- 6 286 306

## Beschreibung

Die vorliegende Erfindung betrieft eine Abgasreinigungseinrichtung für eine Brennkraftmaschine sowie ein Verfahren zum Behandeln von Abgasen einer Brennkraftmaschine. Dabei ist es beispielsweise aus der US 6192679 B1 bekannt, im Abgasleitrohr einer Brennkraftmaschine, welcher über eine Luftzufuhrleitung Frischluft zugeführt wird, einen Abgaskatalysator und einen Adsorptionsfilter vorzusehen. Für die Dauer des Kaltstartbetriebes werden im Adsorptionsfilter unvollständig verbrannte Kohlenwasserstoffe gesammelt und zwischengespeichert, bis ein Abgaskatalysator genügend aufgeheizt ist, um diese Kohlenwasserstoffe oder andere Schadstoffe aus dem Abgasstrom in unschädliche Stoffe umzuwandeln und den Abgasstrom dadurch zu reinigen. Dabei ist vorgesehen, dass zum Regenerieren des Adsorptionsfilters der Abgasstrom auch in seiner erwärmten Form den Adsorber durchströmt und ab einem bestimmten Temperatumiveau der Adsorptionsprozess beendet wird und in einen Desorptionsprozeß übergeht, während dessen der Adsorptionsfilter die gespeicherten Schadstoffe wieder abgibt und diese im nachfolgend angeordneten nunmehr erwärmten Abgaskatalysator entsprechend konvertiert werden.

EP 1 437 488 zeigt eine ähnliche Abgasreinigungseinrichtung.

Eine solche Ausführungsform hat den Nachteil, dass ein kontinuierlicher Übergang zwischen Adsorptions- und des Desorptionsprozeß gegeben ist, so dass eine Desorption im Adsorptionsfilter schon dann stattfinden kann, wenn die Temperatur des Abgaskatalysators noch nicht ausreicht, um ein vollständiges Verbrennen der Schadstoffe und insbesondere der Kohlenwasserstoffe im Abgaskatalysator zu gewährleisten. Darüber hinaus verpufft die Energie der Kohlenwasserstoffe, welche insbesondere im Kaltstartbetrieb im Abgasstrom enthalten sind ungenutzt.

Demgegenüber ist es Aufgabe der Erfindung eine verbesserte Abgasreinigung zu erreichen. Die der Erfindung zugrunde liegende Aufgabe wird dabei durch eine Abgasreinigungseinrichtung gemäß dem unabhängigen Anspruch 1, sowie durch ein Verfahren zum Behandeln von Abgasen gemäß dem unabhängigen Anspruch 19 erreicht.

Eine Abgasreinigungseinrichtung für eine Brennkraftmaschine weist eine Luftzufuhrleitung zur Zufuhr von Frischluft oder Verbrennungsluft zur Brennkraftmaschine auf. Darüber hinaus ist ein Abgasleitrohr vorgesehen, welches von der Brennkraftmaschine bis zu einer Auslassöffnung für die Abgase führt. In dem Abgasleitrohr sind dabei wenigstens ein Abgaskatalysator und ein Adsorptionsfilter für den Kaltstartbetrieb vorgesehen. Darüber hinaus ist ein Desorptionsbetrieb eines Adsorptionsfilters vorgesehen. Gemäß der Erfindung ist ein Desorptionskanal ausgebildet, wobei durch den Desorptionskanal im Desorptionsbetrieb ein Gasstrom vom Adsorptionsfilter in die Luftzufuhrleitung zurückgeführt ist.

Durch die erfindungsgemäße Ausgestaltung wird also der Strom der desorbierten Schadstoffe zusammen mit einem Abgasträgerstrom als Gasstrom vom Adsorptionsfilter mittels des Desorptionskanals in die Luftzufuhrleitung zurückgeführt. Durch diese Maßnahme können die desorbierten Kohlenwasserstoffe in einem weiteren Verbrennungsvorgang in der Brennkraftmaschine energetisch verwertet werden und zur Antriebsleistung der Brennkraftmaschine dienen. Darüber hinaus ist sichergestellt, dass die desorbierten Gase vor dem Durchströmen eines Katalysators zur Reinigung des Abgasstromes erneut einem Verbrennungsprozess in der Brennkraftmaschine zugeleitet werden und deshalb Teil eines aufgeheizten Abgasstromes und kein gekühlter Abgasstrom sind.

Gemäß vorteilhafter Ausgestaltung der Erfindung ist dabei vorgesehen, dass der Desorptionskanal als vom Abgasleitrohr 12 abzweigende zur Saugseite der Brennkraftmaschine führende Abgasrückführleitung ausgebildet ist. Die Abgasrückführleitung durchströmt also den Adsorptionsfilter und die Abgasrückführung im Betrieb der Brennkraftmaschine wird zur Regeneration des Adsorptionsfilters genutzt. Dies ist eine besonders günstige Bauweise, da hierdurch der bauliche Aufwand zur Gestaltung des Desorptionskanals 19 minimiert ist, da keine gesonderte Fluidleitung für den Gasstrom im Desorptionsbetrieb erforderlich ist.

Gemäß vorteilhaften Ausgestaltungen der Erfindung ist vorgesehen, dass ein Abgaskatalysator stromaufwärts des Adsorptionsfilters im Abgasleitrohr angeordnet ist. Dies hat den Vorteil, dass ihm Kaltstartbetrieb der Brennkraftmaschine zunächst eine, wenn auch aufgrund der niedrigeren Katalysator temperatur nur geringfügige und mit zunehmender Katalysatortemperatur immer stärker ansteigende Reinigung der Abgase vorgenommen werden kann, bevor diese den Adsorptionsfilter durchströmen, in welchem die im Abgasstrom enthaltenen verbleibenden Schadstoffe (wie Kohlenwasserstoffe) adsorbiert werden müssen. Hierdurch wird insbesondere die erforderliche Kapazität des Adsorptionsfilters in praktischer Weise verringert. Darüber hinaus wird es dadurch ermöglicht, den Abgaskatalysator möglichst nahe an der Brennkraftmaschine anzuordnen, so dass der Abgasstrom noch eine höhere Temperatur aufweist, als dies der Fall wäre, wenn zunächst ein Adsorptionsfilter durchströmt werden würde. Im Übrigen ist dies auch deshalb von Vorteil, weil dann die Temperatur des Abgasstroms, welche den Adsorptionsfilter durchströmt gegenüber dem Fall, wenn zunächst der Adsorptionsfilter und dann der Katalysator durchströmt werden würde verringert wird und somit die Adsorptionsleistung des Adsorptionsfilters verbessert wird. Insbesondere wird in günstiger Weise das Gleichgewicht aufgrund der niedrigeren Temperatur zu einem höhem Adsorptionsgrad des Adsorptionsfilters hinverschoben und Desorptionseffekte im Adsorptionsfilter treten erst später auf. Dennoch kann es alternativ oder ergänzend Vorgesehen sein, dass stromabwärts des Adsorptionsfilters im Abgasleitrohr ein Abgaskatalysator angeordnet ist. Es ist also insbesondere eine Kombination vorstellbar, bei der stromaufwärts des Adsorptionsfilters im Abgasleitrohr zunächst ein sogenannter Vorkatalysator angeordnet ist und stromabwärts des Adsorptionsfilters sich der Hauptkatalysator im Abgasleitrohr 12 befindet.

Das Abgasleitrohr im Bereich des Adsorptionsfilters zweiflutig ausgebildet ist. Es ist dann ein erster Strömungskanal vorgesehen, welcher den Adsorptionsfilter beinhaltet und als Adsorptionskanal bezeichnet ist, während der zweite Strömungskanal am Adsorptionsfilter vorbeiführt und deshalb als Bypasskanal bezeichnet ist. Durch diese Ausgestaltung wird es ermöglicht, nur in gezielten Betriebsbedingungen ein Durchströmen des Adsorptionsfilters vorzunehmen. Der Adsorptionsfilter wird dann nur solang durchströmt, bis der Abgaskatalysator hinreichende Betriebstemperaturen erreicht hat und damit durch ihn eine ausreichende Reinigung der Abgase erzielt wird. Gemäß der Erfindung ist dabei vorgesehen, dass in dem Adsorptionskanal stromabwärts des Adsorptionsfilters ein erster Wärmetauscher angeordnet ist. Dieser kann im Adsorptionsbetrieb vorteilhafterweise dem Erwärmen der Kühlflüssigkeit im Kühlkreislauf der Brennkraftmaschine dienen. Darüber hinaus dient der erste Wärmetauscher dazu, im Desorptionsbetrieb, bei dem der Abgasstrom in Gegenrichtung des normalen Abgasstroms zunächst den Wärmetauscher und dann den Adsorptionsfilter durchströmt, die Temperatur des in den Adsorptionsfilter eintretenden Abgases auf eine Maximaltemperatur zu begrenzen, die zwar eine Desorption des Filters bewirkt, aber diesen nicht schädigt. Hierdurch wird zum Einen eine bessere Desorption ermöglicht und zum Anderen sind die Anforderungen an die Temperaturbeständigkeit und die Temperaturschwankungen im Bereich der Ausbildung des Adsorptionsfilters geringer, so dass die verwendbare Materialauswahl und Standfestigkeit des Materials verbessert sind.

Hierbei kann sowohl eine Optimierung, als auch eine entsprechende Anpassung der Betriebszustände des Fahrzeugs vorgenommen sein. In besonders günstiger Weise ist dabei die erste Schaltklappe stromaufwärts des Adsorptionsfilters angeordnet und in weiterführender Ausführungsform der Desorptionskanal, welcher vorzugsweise auch als Abgasrückführleitung ausgebildet ist, so angeordnet, dass er zwischen Schaltklappe und Adsorptionsfilter abzweigt. Hierbei ist es insbesondere vorgesehen, dass die erste Schaltklappe Schaltstellungen aufweist in der sowohl der Adsorptionskanal als auch die direkte Abgasführung in den Desorptionskanal gesperrt sind. Somit kann mit dieser Schaltklappe eine Abgasrückführung bzw. die Desorption zurück zur Brennkraftmaschine vorgenommen werden. Es ist insbesondere vorgesehen, dass die Schaltklappe sich beim Kaltstartbetrieb in der Schaltstellung befindet, in der der Bypasskanal abgeschlossen ist. Der gesamte Abgasstrom durchströmt dann gegebenenfalls abgesehen von einem eventuell direkt rückgeführten Abgasteilmassenstrom den Adsorptionsfilter und den eventuell nach dem Adsorptionsfüter angeordneten ersten Wärmetauscher. Danach gelangt der Abgasstrom durch das restliche Abgasleitrohr bis zum Austritt des Abgases. Nach Beendigung des Kaltstartbetriebs kann in einer weiteren Phase die Desorption stattfinden. Die erste Schattklappe wird dazu in eine Stellung gebracht, in der der Adsorptionskanal abgesperrt wird und der Bypasskanal geöffnet ist. Es wird darauf geachtet, dass die Schaltklappe den Desorptionskanal, auch Abgasrückführkanal, nicht abschließt. Der Abgasstrom gelangt dann zunächst durch den Bypasskanal am Adsorptionsfilter und Adsorptionskanal vorbei. Hier teilt er sich in zwei Teilströme auf, der Hauptstrom durchströmt weiterhin das Abgasleitrohr und gelangt zu dessen Endöffnung. Ein Teilstrom, der Gasstrom, welcher zur Desorption und zur Rückführung eines gewünschten Abgasstroms dient, strömt am hintem Ende des Adsorptionskanals entgegen der eigentlichen Durchströmrichtung des Abgasleitrohres in den Adsorptionskanal zurück. Dabei wird zunächst der erste Wärmetauscher durchströmt und das Abgas abgekühlt, danach wird der Adsorptionsfilter durchströmt und es findet die Desorption statt. Dann gelangt der Gasstrom in den Desorptionskanal bzw. die Abgasrückführleitung und wird erneut in die Luftzufuhrleitung bzw. in die Brennkraftmaschine 10 zurückgeleitet. Nach beendigter Desorption, wenn der Adsorptionsfilter regeneriert ist und auch aus anderen Gründen keine Abgasrückführung erforderfich ist, kann die erste Schaltklappe in eine Schaltstellung gebracht werden, in der auch der Desorptionskanal verschlossen ist, so dass der den Gasstrom bildende Teilstrom nicht mehr zurück zur Brennkraftmaschine gelangen kann und deshalb ein Rückströmen von Abgas im Adsorptionskanal nicht mehr stattfindet. Es kann dabei vorgesehen sein, dass auch Schaltstellungen ausgebildet sind, in denen dann eine direkte Gaszufuhr vom Abgasleiterrohr durch die Abgasrückführleitung unter Umgehung des Adsorptionskanals möglich ist, so dass auch weiterhin eine Abgasrückführung unabhängig von der Desorption und dem Durchströmen des Adsorptionskanals möglich ist, wenngleich eine ständige Durchströmung des Adsorptionsfilters mit vorgekühltem Abgas zum Zwecke einer ausschließlichen Abgasrückführung für den Adsorptionsfilter nicht unbedingt schädlich sein muss.

Gemäß ergänzender oder altemativer Ausgestaltung der Erfindung ist vorgesehen, dass der in einer Abgasrückführleitung stattfindende Gasstrom mittels einer zweiten Schaltklappe gesteuert ist, welche in der Abgasrückführleitung angeordnet ist. Hierdurch wird eine größere Variabilität der Abgasrückführung unabhängig von der stattfindenden Regeneration des Adsorptiansfiters ermöglicht.

Es entspricht der Erfindung, wenn der Abgasstrom einen Turbolader antreibt, welcher die in der Luftzuführleitung zugeführte Luft verdichtet. Hierbei kann gemäß einer ersten Ausgestaltung vorgesehen sein, dass der Abgasturbolader stromabwärts des Adsorptionsfilters im Abgasleitrohr angeordnet ist und der Desorptionskanal in Bezug auf den Weg der Ladeluft stromabwärts des Abgasturboladers in die Luftzufuhrieitung der Brennkraftmaschine mündet. Hierbei wird vorgesehen, dass in dem Desorptionskanai ein zweiter Wärmetauscher angeordnet ist, welcher die Temperatur der im Desorptionskanal zurückgeführten Abgase weiter reduziert, um die Gastemperatur in der Luftzufuhrleitung möglichst gering zu halten. Hierzu kann insbesondere auch vorgesehen sein, dass in der Luftzufuhrleitung ein Ladeluftkühler dem Abgasturbolader nachgeordnet ist. Dabei ist es alternativ sowohl möglich, dass der Ladeluftkühler stromaufwärts der Einmündung des Desorptionskanals in die Luftzufuhrleitung als auch stromabwärts dieser Stelle angeordnet ist Mittels des Ladelüftkühlers soll erreicht werden, dass die Temperatur der verdichtenden Luft in der Luftzufuhrleitung möglichst gering gehalten ist. Es entspricht einer nicht erfindungsgemäßen alternativen Ausgestaltung, wenn der Abgasturbolader stromaufwärts des Adsorptionsfilters im Abgasleitrohr angeordnet ist und dementsprechend der Desorptionskanal stromaufwärts des Abgasturboladers in der Luftzufuhrleitung mündet. Auch bei einer solchen Ausgestaltung kann vorgesehen sein, dass in der Luftzufuhrleitung stromabwärts des Abgasturboladers ein Ladeluftkühler vorgesehen ist.

Bei all den vorstehenden Ausgestaltungen der Erfindung ist vorzugsweise vorgesehen, dass sich im Abgasleitrohr ein Schalldämpfer befindet. Dabei kann der Schalldämpfer sowohl stromabwärts als auch stromaufwärts des Adsorptionsfilters angeordnet sein.

Es entspricht auch nicht erfindungsgemäßen Ausführungsformen, wenn der Adsorptionsfilter stromabwärts eines Abgasturboladers im Abgasleitrohr angeordnet ist und ein Desorptionskanal bezüglich des Luftweges stromaufwärts des Abgasturboladers in der Luflzufuhrleitung mündet, wobei noch eine gesonderte, insbesondere stromaufwärts des Abgasturboladers angeordnete Abgasrückführleitung vorgesehen ist. Dabei ist es insbesondere auch möglich, wenn der gesonderte Desorptionskanal zur Abgasrückführleitung geführt ist und in einer Venturidüse oder in einem Ejektor mündet, welcher in die Abgasrückführleitung abgeordnet ist. Durch diese Maßnahme kann der Gasstrom zur Desorption des Adsorptionsfilters von der Niederdruckseite des Abgasturboladers in die Abgasrückführleitung geführt sein, welche auf der Druckseite des Abgasturboladers oder einer Stufe eines Ladersystems ausgebildet ist. Der Ejektor bzw. die Venturidüse sorgen für einen entsprechende Druckabsenkung, wodurch auch eine gute Regeneration des Adsorptionsfilters während der Desorption erreicht wird. In einer Weiterbildung dieser oder vorgenannter Ausführungsformen kann auch die Entnahmestelle des für die Desorption des Adsorptionsfilters und/oder Abgasrückführung erforderliche Teilmassenstrom des Abgases so ausgeführt sein, dass ein Staudruckanteil die Rückführung von Abgas unterstützt. Dies ist besonders dann hilfreich, wenn die Druckdifferenz des rückzuführenden Abgases zwischen Entnahmestelle aus dem Abgasleitrohr und der Einmündungsstelle in das Luftleitrohr für einen ausreichenden rückzuführenden Abgasmassenstrom sonst zu gering wäre.

Gemäß einem erfindungsgemäßen Verfahren zum Reinigen von Abgasen einer Brennkraftmaschine ist vorgesehen, dass die Abgase der Brennkraftmaschine wenigstens einen Abgaskatalysator und zumindest im Kaltstarbetrieb einen Adsorptionsfilter durchströmen. Für die Desorption des Adsorptionsfilters und somit für dessen Regeneration ist vorgesehen, dass ein Gasstrom von Abgasen der Brennkraftmaschine zurückgeführt ist, wobei die Desorption des Adsorptionsfilters in den Gasstrom erfolgt. Dabei kann in ergänzender vorteilhafter Ausführung vorgesehen sein, dass im Desorptionsbetrieb vor dem Durchströmen des Adsorptionsfilters eine Kühlung des Abgasstromes mittels eines ersten Wärmetauschers vorgenommen wird. Der Startzeitpunkt für die Desorption wird vorzugsweise nach der Abgastemperatur so gewählt, dass der vorgelagerte Katalysator seine Anspringtemperatur ganz oder nahezu erreicht hat, der Adsorptionsfilter aber die Temperatur beginnender Desorption noch nicht erreicht hat.

Derartige Verfahren sind insbesondere zur Durchführung auf erfindungsgemäßen Vorrichtungen bestimmt.

Im Übrigen ist die Erfindung nachfolgend auch anhand der in den Figuren dargestellten Ausführungsbeispiele näher erläutert; dabei zeigt:
- Figur 1: eine nicht erfindungsgemäße Vorrichtung während der Kaltstartphase;
- Figur 2: die nicht erfindungsgemäße Vorrichtung im Desorptionsbetrieb;
- Figur 3: eine erste erfindungsgemäße Vorrichtung mit einem Abgasturbolader stromabwärts des Adsorptionsfilters;
- Figur 4: eine zweite erfindungsgemäße Ausführungsform mit einer ersten Schaltklappe, welche den Gasstrom im Desorptionskanal steuert;
- Figur 5: eine dritte Ausführungsform entsprechend der Ausführungsform gemäß Figur 3 mit einem Ladeluftkühler stromabwärts der Einmündung des Desorptionskanals in die Luftzufuhrleitung;
- Figur: 6 eine weitere nicht erfindungsgemäße Ausführungsform mit einem Adsorptionsfilter, welcher auf der Niederdruckseite eines Turboladers angeordnet ist;
- Figur 7: eine weitere nicht erfindungsgemäße Ausführungsform mit von der Abgasrückführleitung getrennten Desorptionskanal; und
- Figur 8: eine weitere nicht erfindungsgemäße Ausführungsform mit einem Desorptionskanal, welcher in einer Venturidüse in der Abgasrückführleitung mündet.

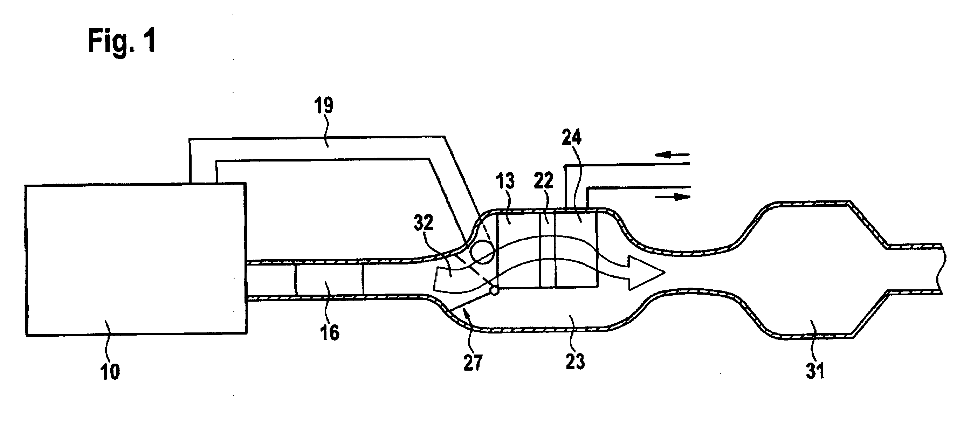

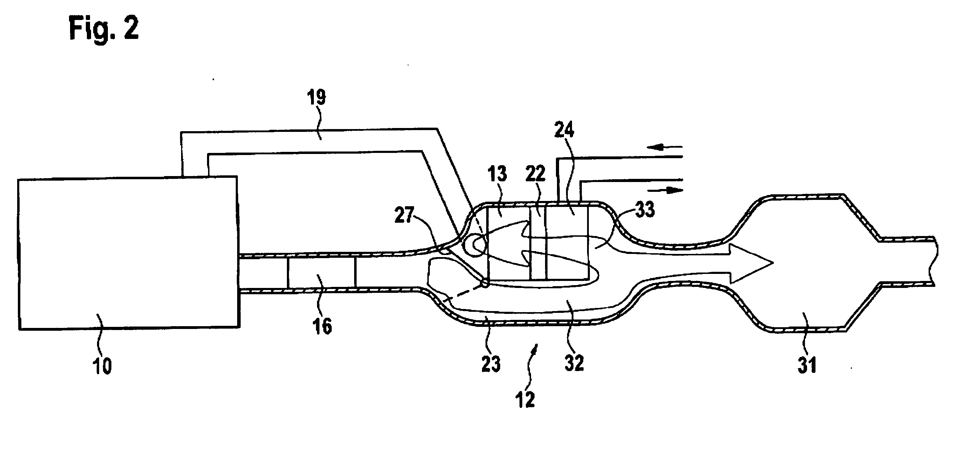

Die Figuren 1 bis 8 zeigen alle Ausführungsformen von Abgasreinigungseinrichtungen in schematischer Darstellung. Dabei ist jeweils eine Brennkraftmaschine 10 vorgesehen, welche die Abgase in ein Abgasleitrohr 12 abgibt, wobei der Brennkraftmaschine 10 Frischluft über die Luftzufuhrleitung 11, welche in den Figuren 1 und 2 aus Vereinfachungsgründen nicht gezeigt ist, zugeführt wird. In dem Abgasleitrohr 12 ist dabei jeweils wenigstens ein Abgaskatalysator 16, wenigstens eine erste Schaltklappe 27, ein zweiflutiger Bereich des Abgasleitrohres 12 - bestehend aus einem Bypasskanal 23 und einem Adsorptionskanal 22, in welchem ein Adsorptionsfilter 13 angeordnet ist - und ein Schalldämpfer 31 vorgesehen. Darüber hinaus führt ein Desorptionskanal 19, welcher auch als Abgasrückführleitung 20 ausgebildet ist, zurück in die Brennkraftmaschine 10 (Figuren 1 und 2) bzw. in die Luftzufuhrleitung der Brennkraftmaschine 10 zurück.

Nachfolgend ist zunächst anhand der Figuren 1 und 2 die Funktion der Abgasreinigungseinrichtung beschrieben, wobei dabei in den Figuren 1 und 2 die oben stehend beschriebene Grundform der Abgasreinigungseinrichtung darstellt, während in den weiteren Figuren verschiedene Ausführungsformen und Varianten von Ausführungsformen) erfindungsgemäßer Abgasreinigungseinrichtungen gezeigt sind, die sich durch Anordnung und unterschiedliche Komponenten von der Grundform unterscheiden. Die Funktionsweise dieser Abgasreinigungseinrichtungen entspricht aber im Wesentlichen der Funktionsweise der Grundform, so dass diesbezüglich nur auf Abweichungen eingegangen wird.

Die Figuren 1 und 2 zeigen eine Ausführungsform einer nicht erfindungsgemäßen Abgasreinigungseinrichtung. Die Brennkraftmaschine 10 erzeugt in ihrem Betrieb Abgase. Der erzeugte Abgasstrom wird durch das Abgasleitrohr 12 abgeleitet. Dabei durchströmt der Abgasstrom zunächst einen Abgaskatalysator 16 der ein Reinigen der Abgase von Schadstoffen, beispielsweise insbesondere im Kaltstartbetrieb vorhandene Kohlenwasserstoffe, vornimmt Stromabwärts davon ist das Abgasleitrohr 12 zweiflutig ausgebildet, wobei die eine Flut den Adsorptionskanal 22 und die andere Flut den Bypasskanal 23 bildet. Das Durchströmen des Abgasstromes wird dabei durch die erste Schaltklappe 27 gesteuert, so dass alternativ entweder der Bypasskanal 23 oder der Adsorptionskanal 22 durchströmt wird in der Figur 1 ist dabei eine Stellung der ersten Schaltklappe 27 gezeigt, wie sie im Kaltstartbetrieb erzeugt wird und wobei der gesamte Abgasstrom den Adsorptionskanal 22 durchströmt. Dabei ist in dem Adsorptionskanal 22 der Adsorptionsfilter 13 und stromabwärts des Adsorptionsfilters ein erster Wärmeübertrager 24 angeordnet. Der Bypasskanal 23 führt an diesen beiden Einrichtungen vorbei, stromabwärts vereinigen sich die beiden Kanäle wieder im Abgasleitrohr 12. In diesem ist dann der Schalldämpfer 31 angeordnet.

Dabei ist ein Desorptionskanal 19 vorgesehen, welcher auch als Abgasrückführleitung 20 dienen kann. Der Desorptionskanal 19 ist an die Ansaugseite für die Luftzufuhrleitung 11 der Brennkraftmaschine 10 geführt, wobei die Luftzufuhrleitung 11 in den Figuren 1 und 2 nicht dargestellt ist. Dabei beginnt der Desorptionskanal in dem Bereich zwischen der ersten Schaltklappe 27 und dem Adsorptionsfilter 13, also in Durchströmrichtung des Abgasleitrohrs 12 gesehen stromaufwärts des Adsorptionsfilters 13. Dabei ist durch den Pfeil 32 der Abgasstrom im Abgasleitrohr 12 dargestellt. In der Figur 2 zeigt darüber hinaus der Pfeil 33 den Teilstrom des Abgasstroms 32, welcher der Regeneration des Adsorptionsfilters dient.

Die Figur 1 zeigt den Betrieb der Abgasreinigungseinrichtung in der Kaltstartphase. Die Klappe 27 befindet sich in einer Stellung, in der der gesamte Abgasstrom durch den Adsorptionskanal 22 geführt ist. Der Abgasstrom 32 durchströmt dabei zunächst den Adsorptionsfilter 13 wo er von Schadstoffen durch Adsorption an einem Trägermaterial befreit wird. Danach wird noch der erste Wärmetauscher 24 durchströmt mittels dem das Kühlwasser des Kühlkreislaufes der Brennkraftmaschine rascher aufgewärmt werden kann, da die thermische Energie des Abgasstromes stromabwärts des Katalysators 16 noch ausgenutzt werden kann. Dann gelangt der Abgasstrom in den Schalldämpfer 31 und verlässt dann das Abgasleitrohr 12.

Die Figur 2 zeigt die Einrichtung der Figur 1 nach dem Erwärmen des Abgaskatalysators 16 der Brennkraftmaschine im Desorptionsbetrieb des Adsorptionsfilters. Die Schaltklappe 27 befindet sich dabei in einer Stellung in der zunächst kein Durchströmen des Adsorptionskanals 22 stattfindet, so dass der Abgasstrom wie durch den Pfeil 32 dargestellt, zunächst vollständig den Bypasskanal 23 durchströmt. Erst stromabwärts findet eine Aufteilung in zwei Teilströme des Abgasstromes statt. Der Hauptstrom verlässt dabei das Abgasleitrohr 12 durch den Schalldämpfer 31.

Ein Teilstrom des Abgasstromes 32, nämlich der Gasstrom - durch den Pfeil 33 angezeigt -, durchströmt den Adsorptionskanal 22 entgegen der eigentlich vorgesehenen Durchströmrichtung. Es wird dann zunächst der erste Wärmetauscher 24 durchströmt, durch welchen der Gasstrom 32 abgekühlt wird und somit ein Schutz des Adsorptionsfilters 13 vor zu hohen Abgastemperaturen geschaffen wird. Anschließend durchströmt der Gasstrom den Adsorptionsfilter 13 und nimmt dabei im Adsorptionsfilter angesammelte Schadstoffe auf, welche in den Gasstrom desorbiert werden. Über den Desorptionskanal 19 wird dann der Gasstrom in die Brennkraftmaschine zurückgeführt. Ein emeutes Verbrennen der desorbierten Schadstoffe und anschließende Reinigung im nunmehr aufgewärmten Katalysator 16 findet statt.

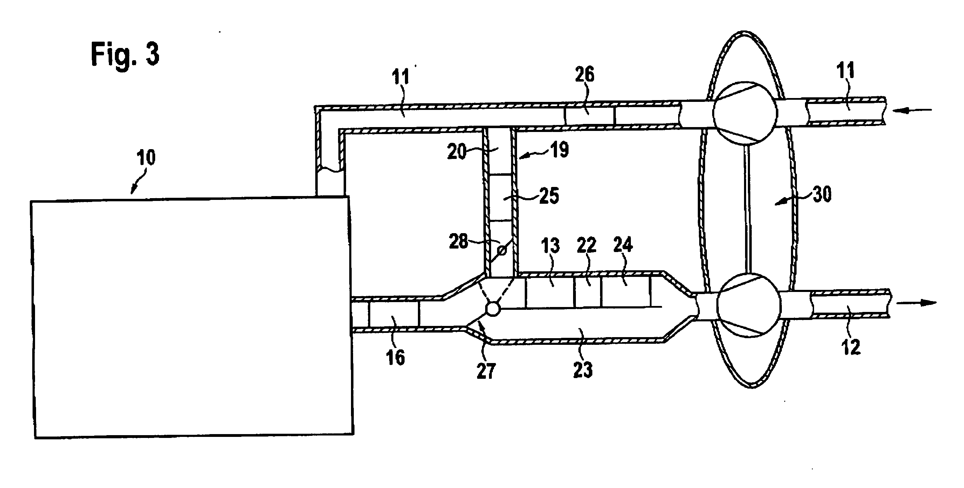

Diese grundlegende Funktionsweise, wie sie vorstehend anhand der Figuren 1 und 2 näher erläutert wurde, gilt auch für die Ausführungsformen gemäß den Figuren 3 bis 8. Auch vom Aufbau entsprechen sich die Einrichtungen einander im Wesentlichen, so dass nachfolgend nur auf die baulichen Unterschiedsmerkmale eingegangen wird.

Die Figur 3 zeigt eine Ausführungsform, welche sich zunächst einmal dadurch unterscheidet, dass ein Abgasturbolader 30, nachfolgend auch kurz Turbolader genannt, vorgesehen ist, welcher die in der Luftzufuhrleitung 11 zugeführte Luft komprimiert. In der Figur 3 ist der stromabwärts im Abgasleitrohr 12 angeordnete Schalldämpfer nicht mehr gezeichnet. Auch hier ist das Abgasleitrohr 12 in einem Bereich stromabwärts des Abgaskatalysators 16 zweiflutig ausgebildet, um einen Bypasskanal 23 und einen Adsorptionskanal 22 zu bilden, in welchem der erste Wärmetauscher 24 stromabwärts des Adsorptionsfilters 13 angeordnet ist. Dabei ist der Desorptionskanal 19 als Abgasrückführleitung 20 ausgebildet und in dieser kann optional der weitere zweite Wärmetauscher 25 angeordnet sein, welcher der Kühlung der zurückgeführten Abgase dient. Zur Steuerung der Abgasrückführung auch außerhalb des Desorptionsbetriebs ist dabei in der Abgasrückführleitung 20 die zweite Schaltklappe 28 angeordnet. Die erste Schaltklappe kann dabei vorzugsweise in zwei unterschiedliche Stellungen gebracht werden. In der ersten, zeichnerisch dargestellten Stellung ist der Bypasskanal 23 abgesperrt und der Abgasstrom wird - in Abhängigkeit der Stellung der zweiten Schaltklappe 28 - auf den Adsorptionskanal 22 und die Abgasrückführleitung 20 verteilt. Dies ist die Stellung für den Kaltstartbetrieb des Fahrzeugs. Zur Regeneration des Adsorptionsfilters 13 wird die Klappe 27 in eine Stellung verbracht, in der als einziger möglicher Strömungskanal für den Abgasstrom der Bypasskanal 23 möglich ist. Eine Rückströmung, entsprechend der in der Figur 2 gezeigten Fall, ist dann in Abhängigkeit der Stellung der zweiten Schaltklappe 28 über die Abgasrückführleitung 20 möglich. Die Rückführung von Abgasen über die Abgasrückführleitung 20 erfolgt stromabwärts eines Ladeluftkühlers 26 in die Luftzufuhrleitung 11. Um möglichst geringe Temperaturen der zugeführten Luft zu ermöglichen ist dabei vorgesehen, dass der zweite Wärmetauscher 25 den zurückgeführten Abgasstrom bzw. den Gasstrom zur Regeneration des Adsorptionsfilters möglichst weit herunterkühlt. Die oben genannte zweite Schaltstellung der ersten Schaltklappe 27 ist dabei gestrichelt in der Figur eingezeichnet.

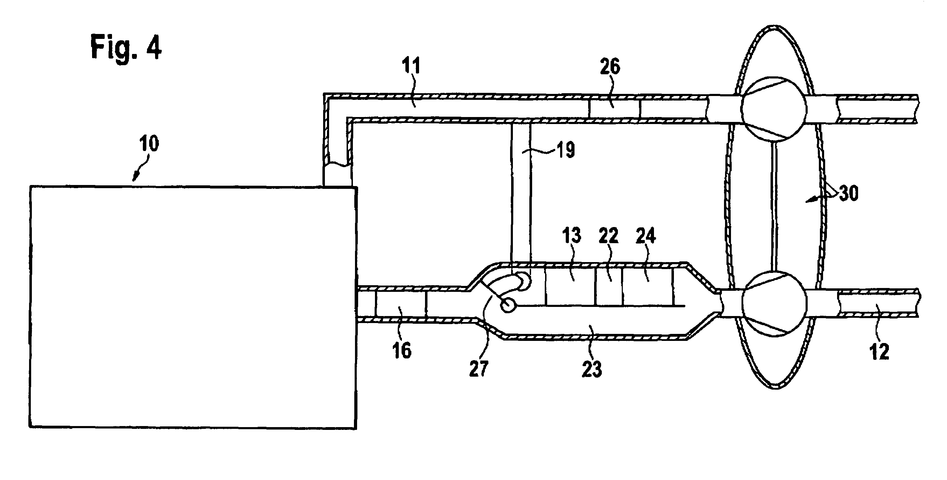

Die Figur 4 zeigt eine gegenüber der Figur 1 abgewandelte Ausführung, wobei bei dieser Ausführung die beiden Klappen 27, 28 in Figur 3 zu einer einzigen Kombiklappe 27 vereinigt werden. Dabei übernimmt die Schaltklappe 27 sowohl die Funktion des Freigebens bzw. Sperrens des Bypasskanals 23 als auch über eine entsprechende Gestaltung, das Freigeben und Absperren des Desorptionskanals 19 und Abgasrückführkanals 20, so dass eine Regelung der Abgasrückführungsrate während des Desorptionsbetriebs über die erste Schaltklappe 27 möglich ist. Die zweite Schaltklappe 28 entfällt dann. Der zweite Wärmetauscher 25 wurde in dieser Darstellung nicht gezeichnet, kann aber optional vorhanden sein.

An dieser Stelle sei betont, dass der Desorptionsbetrieb gleichzeitig der Standardbetrieb der Vorrichtung bei betriebswarmem Motor darstellt. Das heißt, der gesamte rückzuführende Abgasmassenstrom geht immer automatisch zunächst über den ersten Wärmeübertrager zur Vorkühlung des rückzuführenden Abases und dann über den Adsorptionsfilter.

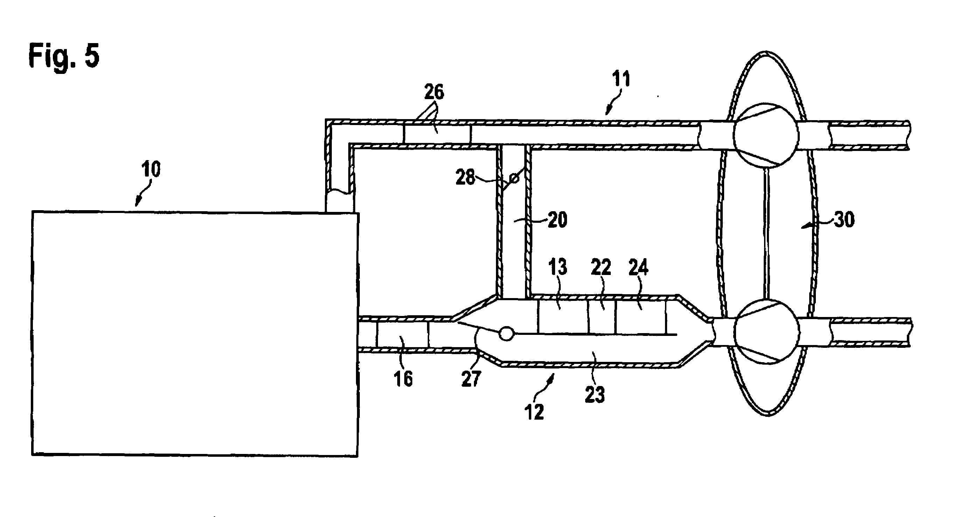

Die Figur 5 zeigt eine Abwandlung der Ausführungsform gemäß der Figur 3, bei der auf den zweiten Wärmetauscher 25 verzichtet wurde. Die Funktion des zweiten Wärmetauscher 25 wird von dem Ladeluftkühler 26 mit übernommen, wobei zu diesem Zweck der Ladeluftkühler 26 stromabwärts der Einmündung der Abgasrückführleitung 20 in die Luftzufuhrleitung 11 angeordnet ist.

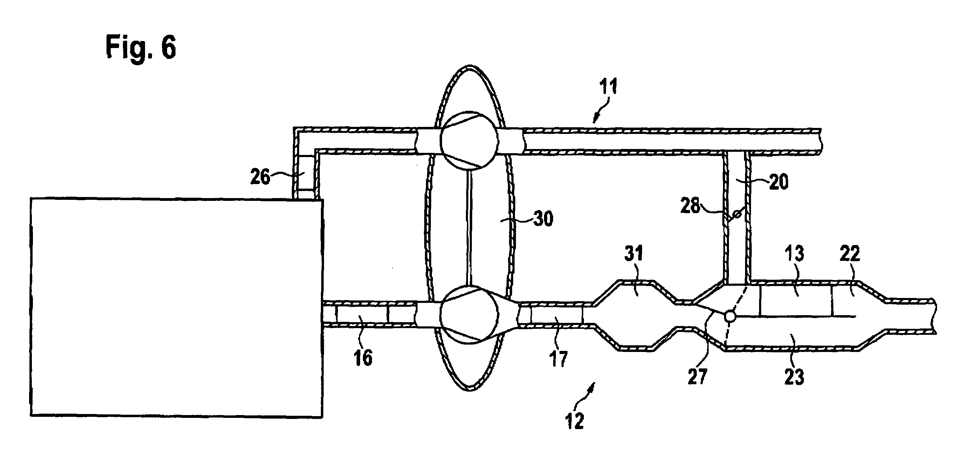

Die Figuren 6 bis 8 zeigen nicht erfindungsgemäße Ausführungsformen, bei denen der Turbolader stromaufwärts des Adsorptionsfilters 13 in dem Abgasleitrohr 12 angeordnet ist. Dabei ist die Funktion des Katalysators auf zwei Katalysatoren 16, 17 verteilt, wobei einer insbesondere als Vorkatalysator dient und extrem motomah angeordnet ist, während der zweite Katalysator 17 stromabwärts des Turboladers 30 in Abgasleitrohr 12 angeordnet ist.

Dabei ist nach dem zweiten Abgaskatalysator 17 zunächst der Schalldämpfer 31 angeordnet, so dass der Adsorptionsfilter 13 in vorteilhafter Ausführungsform sehr weit vom Motor angeordnet ist. In diesem Bereich ist der Abgasstrom sehr kalt und eine gute Adsorption ist möglich. Aufgrund der motorfemen Anordnung kann auch bei den Ausführungsformen der Figuren 6 bis 8 auf den ersten Wärmetauscher 24 verzichtet werden, der sonst zum Schutz des Adsorptionsfilters 13 im Desorptionsbetrieb im Adsorptionskanal 22 vorgesehen ist. Altemativ sind natürlich Ausführungsformen denkbar, in denen dennoch ein solcher erster Wärmetauscher vorgesehen ist.

Die Figur 6 zeigt dabei eine nicht erfindungsgemäße Ausführungsform, bei der der Desorptionskanal auch einer Abgasrückführleitung 20 dient. Die Schaltklappe kann in diesem Falle auch 3 Schaltstellungen aufweisen und es ist eine zweite Schaltklappe 28 in der Abgasrückfühmngsleitung 20 angeordnet, welche die Abgasrückführung stromaufwärts der Kompressionsstufe des Abgasturboladers 30 in der Luftzufuhrleitung 11 regelt. Es ist nicht erforderlich in die Abgasrückführleitung 20 einen zweiten Wärmetauscher 25 zu integrieren, auf diesen wurde also ebenfalls verzichtet. Stromabwärts der Kompressionsstufen des Abgasturboladers 30 ist ein Ladeluftkühler 26 in der Luftzufuhrleitung 11 vorgesehen, der für eine geringe Temperatur der zugeführten Luft oder Abgas-Luft-Gemischs sorgt.

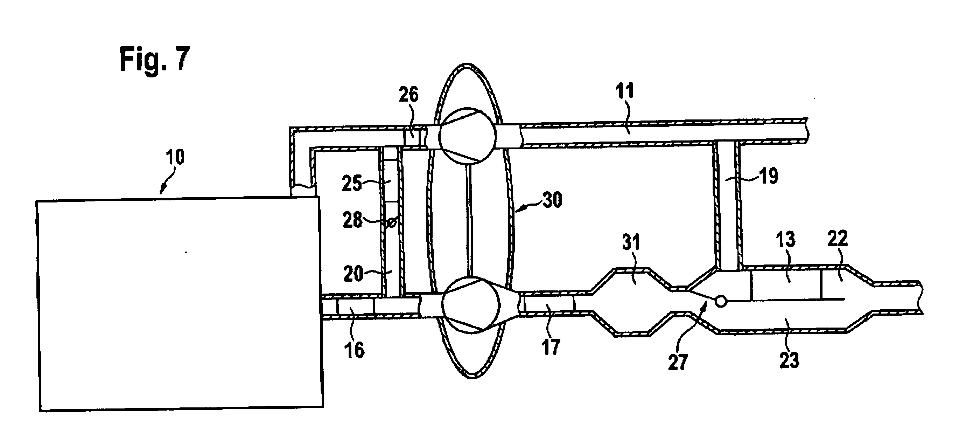

Die Figur 7 zeigt eine nicht erfindungsgemäße Ausführungsform, die sich von der Ausführungsform gemäß der Figur 6 dahingehend unterscheidet, dass die Abgasrückführungsleitung 20 gesondert von dem Desorptiohskanal 19 ausgeführt ist. Die Abgasrückführung erfolgt durch einen gegebenenfalls sehr motornah angeordneten Kanal. Die Abgasrückführleitung 20 zweigt unmittelbar nach dem ersten Katalysator 16 von dem Abgasleitrohr 12 ab. In der Abgasrückführleitung 20 ist dabei die zweite Schaltklappe 28 zum Steuern der Abgasrückführung und der zweite Wärmetauscher 25 angeordnet, um die rückgeführten Abgase zu kühlen. Die Abgasrückführleitung 20 mündet dabei stromabwärts eines Ladeluftkühlers 26 in die Luflzufuhrleitung 11.

Stromabwärts des Schalldämpfers 31 ist wiederum die zweiflutige Ausbildung des Abgasleitrohrs 12 gegeben. Die Schaltklappe 27 nimmt dabei nur die Umschaltung zwischen Bypasskanal 23 und Adsorptionskanal 22 vor. Im Adsorptionskanal 22 ist lediglich der Adsorptionsfilter 13 angeordnet. Von dem Raum zwischen Adsorptionsfilter 13 und Schaltklappe 27 zweigt der Desorptionskanal 19 ab, welcher stromaufwärts des Turboladers 30 in der Luftzufuhrleitung 11 mündet.

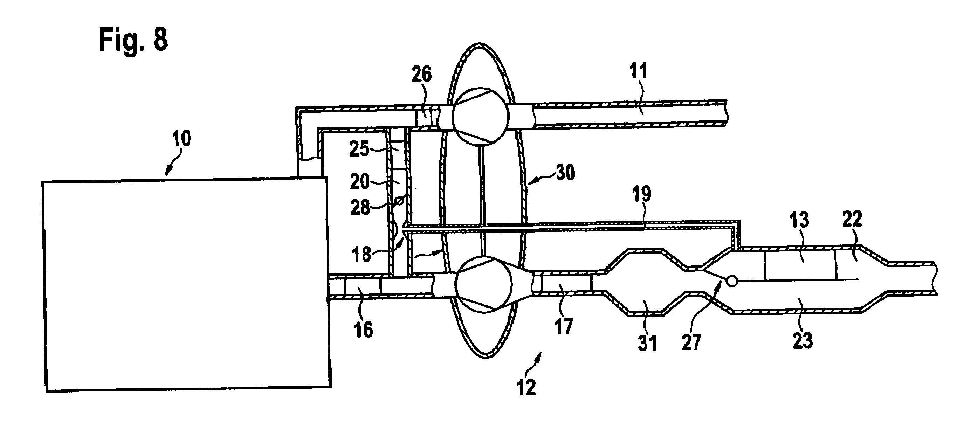

Die Figur 8 zeigt eine nicht erfindungsgemäße Ausführungsform, die eine Abwandlung der Ausführungsform der Figur 7 darstellt. Hierbei ist im Unterschied zu der Ausführungsform gemäß der Figur 7 der Desorptionskanal 19 nicht in die Luftzufuhrleitung 11 zurückgeführt, sondern in der Abgasrückführleitung 20 stromabwärts der zweiten Schaltklappe 28. Der Mündungsbereich ist dabei als Venturidüse 18 ausgebildet, an deren Stelle auch ein Ejektor treten könnte. Dieses Element ist notwendig, um Desorptionsgas entgegen dem vom Abgasturbolader erzeugten Druckgefälle letztlich in die Ansaugluft zu befördern.

Auch kann dieser Ejektor auch direkt in der Ansaugluftleitung angeordnet sein, zum Beispiel stromab des Ladeluftkühlers.

Als weitere Maßnahme zum Aufbau eines ausreichenden Druckgefälles längs des Desorptionskanals 19 kann die Entnahmestelle des benötigten Abgasteilstroms an der Vereinigungsstelle des Adsorptionskanals und des Bypasskanals so gestaltet sein, dass ein dynamischer Druckanteil des mit hoher Geschwindigkeit strömenden Abgas-Hauptstromes genutzt wird.

## Patentansprüche

1. Abgasreinigungseinrichtung für eine Brennkraftmaschine (10), mit
- einer Luftzufuhrleitung (11) zur Zufuhr von Frischluft;
- einem Abgasleitrohr (12), welches zu einer Auslassöffnung für die Abgase führt, in welchem
- wenigstens ein Abgaskatalysator (16) und
- ein Adsorptionsfilter (13) für den Kaltstartbetrieb, für welchen auch ein Desorptionsbetrieb vorgesehen ist, angeordnet ist, wobei
- im Desorptionsbetrieb ein Gasstrom den Adsorptionsfilter (13) durchströmt, wobei der Gasstrom durch einen Desorptionskanal (19) in die Luftzufuhrleitung (11) zurückgeführt ist,
- das Abgasleitrohr (12) im Bereich des Adsorptionsfilter (13) zweiflutig ausgebildet ist, wodurch ein Adsorptionskanal (22), welcher den Adsorptionsfilter (13) beinhaltet, und parallel dazu ein Bypasskanal (23) ausgebildet ist,
- eine erste Schaltklappe (27) zum Umschalten des Abgasstromes auf Adsorptionskanal (22) und Bypasskanal (23) vorgesehen ist,
**dadurch gekennzeichnet, dass**
- in dem Adsorptionskanal (22) stromabwärts des Adsorptionsfilters (13) ein erster Wärmetauscher (24) angeordnet ist,
- ein Abgasturbolader (30) vorgesehen ist, welcher durch den Abgasstrom im Abgasleitrohr (12) angetrieben wird und die in der Luftzufuhrleitung (11) der Brennkraftmaschine zugeführte Frischluft verdichtet,
- weiterhin der Abgasturbolader (30) stromabwärts des Adsorptionsfilters (13) im Abgasleitrohr (12) angeordnet ist und der Desorptionskanal (19) stromabwärts des Abgasturboladers (30) in die Luftzufuhrleitung der Brennkraftmaschine mündet und
- in dem Desorptionskanal (19) ein zweiter Wärmetauscher (25) angeordnet ist.

2. Abgasreinigungseinrichtung nach Anspruch 1, **dadurch gekennzeichnet, dass** der Desorptionskanal (19) als Abgasrückführleitung (20) ausgebildet ist.

3. Abgasreinigungseinrichtung nach Anspruch 1 oder 2, **dadurch gekennzeichnet, dass** in dem Abgasleitrohr (12) stromaufwärts des Adsorptionsfilters (13) ein Abgaskatalysator (17) angeordnet ist.

4. Abgasreinigungseinrichtung nach einem der Ansprüche 1 bis 3, **dadurch gekennzeichnet, dass** in dem Abgasleitrohr (12) stromabwärts des Adsorptionsfilters (13) ein Abgaskatalysator (16) angeordnet ist.

5. Abgasreinigungseinrichtung nach einem der vorhergehenden Ansprüche, **dadurch gekennzeichnet, dass** die erste Schaltklappe (27) stromaufwärts des Adsorptionsfilters (13) angeordnet ist.

6. Abgasreinigungseinrichtung nach einem der vorhergehenden Ansprüche, **dadurch gekennzeichnet, dass** im Adsorptionskanal (22) zwischen erster Schaltklappe (27) und Adsorptionsfilter (13) der Desorptionskanal (19), welcher vorzugsweise auch als Abgasrückführleitung (20) ausgebildet ist, abweist.

7. Abgasreinigungseinrichtung nach einem der vorhergehenden Ansprüche, **dadurch gekennzeichnet, dass** die erste Schaltklappe (27) Schaltstellungen aufweist, in der sie den Desorptionskanal (19), insbesondere die Abgasrückführleitung (20) absperrt.

8. Abgasreinigungseinrichtung nach einem der vorhergehenden Ansprüche, dass die erste Schaltklappe (27) dem Steuern des durch den Adsorptionsfilter strömenden Gasstroms im Desorptionsbetrieb dient.

9. Abgasreinigungseinrichtung nach einem der vorhergehenden Ansprüche, **dadurch gekennzeichnet, dass** eine Abgasrückführleitung (20) vorgesehen ist, wobei der Volumenstrom des zurückgeführten Abgasstromes mittels einer zweiten Schaltklappe (28) gesteuert ist, wobei der Desorptionskanal (19) in die Abgasrückführleitung (20) mündet oder als solche ausgebildet ist.

10. Abgasreinigungssystem nach einem der vorhergehenden Ansprüche, **dadurch gekennzeichnet, dass** in der Luftzufuhrleitung (11) dem Abgasturbolader (30) ein Ladeluftkühler (26) nachgeordnet ist.

11. Abgasreinigungssystem nach einem der vorhergehenden Ansprüche, **dadurch gekennzeichnet, dass** der Desorptionskanal (19) stromaufwärts des Ladeluftkühlers (26) in die Luftzufuhrleitung (11) mündet.

12. Abgasreinigungseinrichtung nach einem der vorhergehenden Ansprüche, **dadurch gekennzeichnet, dass** der Desorptionskanal (19) stromabwärts des Ladeluftkühlers (26) in die Luftzufuhrleitung (11) mündet.

13. Abgasreinigungseinrichtung nach einem der vorhergehenden Ansprüche, **dadurch gekennzeichnet, dass** in der Luftzufuhrleitung (11) ein Ladeluftkühler (26) stromabwärts des Abgasturboladers (30) angeordnet ist.

14. Abgasreinigungseinrichtung nach einem der vorhergehenden Ansprüche, **dadurch gekennzeichnet, dass** der Adsorptionsfilter (13) stromaufwärts eines Schalldämpfers (31) im Abgasleitrohr (12) angeordnet ist.

15. Abgasreinigungseinrichtung nach einem der vorhergehenden Ansprüche, **dadurch gekennzeichnet, dass** der Adsorptionsfilter (13) stromabwärts eines Schalldämpfers (31) im Abgasleitrohr angeordnet ist.

16. Abgasreinigungseinrichtung nach einem der vorhergehenden Ansprüche, **dadurch gekennzeichnet, dass** ein gesonderter Desorptionskanal (19) vorgesehen ist, der vom Adsorptionsfilter (13) abzweigt und in einer Venturidüse (18) oder einem Ejektor in einer Abgasrückführleitung (20) mündet, wobei die Abgasrückführleitung (20) stromaufwärts des Abgasturboladers (30) von dem Abgasleitrohr (12) abzweigt und stromabwärts des Abgasturboladers (30) und insbesondere stromabwärts eines Ladeluftkühlers (26) in die Luftzufuhrleitung (11) mündet, wobei vorzugsweise stromaufwärts der Einmündung des Desorptionskanals (19) in die Abgasrückführleitung wenigstens eines der Elemente aus zweiter Schaltklappe (28) und zweiter Wärmetauscher (25) angeordnet ist.

17. Verfahren zum Behandeln von Abgasen einer Brennkraftmaschine, wobei die Abgase der Brennkraftmaschine (10) einen Abgaskatalysator (16) und zumindest im Kaltstartbetrieb einen Adsorptionsfilter (13) durchströmen mit einer Abgasreinigungseinrichtung nach zumindest einem der vorhergehenden Ansprüche, **dadurch gekennzeichnet, dass** ein Gasstrom von Abgasen der Brennkraftmaschine in die Brennkraftmaschine zurückgeführt ist, wobei die Desorption des Adsorptionsfilters (13) durch diesen Gasstrom erfolgt.

18. Verfahren nach Anspruch 19, **dadurch gekennzeichnet, dass** im Desorptionsbetrieb vor dem Durchströmen des Adsorptionsfilters (13) ein Kühlen des Abgasstromes mittels eines ersten Wärmetauschers (24) erfolgt.

19. Verfahren nach einem der vorhergehenden Ansprüche, **dadurch gekennzeichnet, dass** der Desorptionsbetrieb beginnt, wenn das Abgas eine Temperatur erreicht hat, die zwischen der Anspringtemperatur des Katalysators und der Temperatur beginnender Desorption des Adsorptionsfilters liegt.

## Claims

1. Exhaust emission control unit for an internal combustion engine (10), with
- an air supply line (11) for the supply of fresh air;
- an exhaust gas guidance tube (12) leading to an outlet for the exhaust gases, wherein
- there are disposed at least one catalytic converter (16) and
- an adsorption filter (13) for cold start mode, for which a desorption mode is also provided, wherein
- a gas flow passes through the absorption filter (13) in the desorption mode, the gas flow being recirculated into the air supply line (11) through a desorption passage (19),
- wherein the exhaust gas guidance tube (12) is designed for double flow in the region of the adsorption filter (13), whereby an adsorption passage (22) containing the adsorption filter (13) and a parallel bypass passage (23) are formed,
- and wherein a first switching valve (27) is provided for switching the exhaust gas flow to the adsorption passage (22) and to the bypass passage (23),
**characterised in that**
- a first heat exchanger (24) is provided in the adsorption passage (22) downstream of the adsorption filter (13),
- a turbocharger (30) is provided, which is driven by the exhaust gas flow in the exhaust gas guidance tube (12) and compresses the fresh air supplied to the internal combustion engine in the air supply line (11),
- wherein the turbocharger (30) is further located downstream of the adsorption filter (13) in the exhaust gas guidance tube (12) and the desorption passage (19) terminates in the air supply line of the internal combustion engine downstream of the turbocharger (30), and
- wherein a second heat exchanger (25) is provided in the desorption passage (25).

2. Exhaust emission control unit according to claim 1, **characterised in that** the desorption passage (19) is designed as an exhaust gas recirculation line (20).

3. Exhaust emission control unit according to claim 1 or 2, **characterised in that** a catalytic converter (17) is provided in the exhaust gas guidance tube (12) upstream of the adsorption filter (13).

4. Exhaust emission control unit according to any of claims 1 to 3, **characterised in that** a catalytic converter (16) is located in the exhaust gas guidance tube (12) downstream of the adsorption filter (13).

5. Exhaust emission control unit according to any of the preceding claims, **characterised in that** the first switching valve (27) is located upstream of the adsorption filter (13).

6. Exhaust emission control unit according to any of the preceding claims, **characterised in that** the desorption passage (19), which is preferably designed as an exhaust gas recirculation line (20), branches off the adsorption passage (22) between the first switching valve (27) and the adsorption filter (13).

7. Exhaust emission control unit according to any of the preceding claims, **characterised in that** the first switching valve (27) has switching positions in which it blocks the desorption passage (19), in particular the exhaust gas recirculation line (20).

8. Exhaust emission control unit according to any of the preceding claims, **characterised in that** the first switching valve (27) is used for controlling the gas flow through the adsorption filter in the desorption mode.

9. Exhaust emission control unit according to any of the preceding claims, **characterised in that** an exhaust gas recirculation line (20) is provided, wherein the flow rate of the recirculated exhaust gas flow is controlled by means of a second switching valve (28), the desorption passage (19) terminating in or being designed as the exhaust gas return line (20).

10. Exhaust emission control unit according to any of the preceding claims, **characterised in that** an intercooler (26) is provided in the air supply line (11) downstream of the turbocharger (30).

11. Exhaust emission control unit according to any of the preceding claims, **characterised in that** the desorption passage (19) terminates in the air supply line (11) upstream of the intercooler (26).

12. Exhaust emission control unit according to any of the preceding claims, **characterised in that that** the desorption passage (19) terminates in the air supply line (11) downstream of the intercooler (26).

13. Exhaust emission control unit according to any of the preceding claims, **characterised in that** an intercooler (26) is provided in the air supply line (11) downstream of the turbocharger (30).

14. Exhaust emission control unit according to any of the preceding claims, **characterised in that** the adsorption filter (13) is located in the exhaust gas guidance tube (12) upstream of a silencer (31).

15. Exhaust emission control unit according to any of the preceding claims, **characterised in that** the adsorption filter (13) is located in the exhaust gas guidance tube (12) downstream of a silencer (31).

16. Exhaust emission control unit according to any of the preceding claims, **characterised in that** a separate desorption passage (19) is provided, which branches off the adsorption filter (13) and terminates in a venturi tube (18) or an ejector in an exhaust gas recirculation line (20), wherein the exhaust gas recirculation line (20) branches off the exhaust gas guidance tube (12) upstream of the turbocharger (30) and terminates in the air supply line (11) downstream of the turbocharger (30) and in particular downstream of an intercooler (26), at least one of the elements of second switching valve (28) and second heat exchanger (25) being preferably located upstream of the point where the desorption passage (19) terminates in the exhaust gas recirculation line.

17. Method for the treatment of exhaust gases of an internal combustion engine, wherein the exhaust gases of the internal combustion engine (10) pass through a catalytic converter (16) and, at least in the cold start mode, through an adsorption filter (13), with an exhaust emission control unit according to one or more of the preceding claims, **characterised in that** an exhaust gas flow of the internal combustion engine is recirculated into the internal combustion engine, wherein the adsorption filter (13) is desorbed by the gas flow.

18. Method according to claim 17, **characterised in that** the exhaust gas flow is cooled by means of a first heat exchanger (24) in the desorption mode before passing through the adsorption filter (13).

19. Method according to any of the preceding claims, **characterised in that** the desorption mode starts when the exhaust gas has reached a temperature between the light-off temperature of the catalytic converter and the temperature at which the desorption of the adsorption filter begins.

## Revendications

1. Dispositif d'épuration des gaz d'échappement pour un moteur à combustion interne (10), comprenant :
- une conduite d'alimentation d'air (11) pour l'alimentation en air frais ;
- un collecteur de gaz d'échappement (12) qui va jusqu'à une ouverture de sortie pour les gaz d'échappement, collecteur de gaz d'échappement dans lequel sont disposés :
- au moins un catalyseur de gaz d'échappement (16) et
- un filtre à adsorption (13) pour le fonctionnement lors d'un démarrage à froid, filtre à adsorption qui est prévu également pour un fonctionnement en désorption,
- où, au cours du fonctionnement en désorption, un flux gazeux traverse le filtre à adsorption (13), où le flux gazeux est recyclé dans la conduite d'alimentation d'air (11), à travers un conduit de désorption (19),
- le collecteur de gaz d'échappement (12) est configuré à double flux dans la zone du filtre à adsorption (13), grâce à quoi un conduit d'adsorption (22) contient le filtre à adsorption (13), et un conduit de dérivation (23) est configuré en étant parallèle à ce conduit d'adsorption,
- il est prévu un premier volet de commande (27) pour inverser le passage du flux gazeux sur le conduit d'adsorption (22) et sur le conduit de dérivation (23),
**caractérisé**
- **en ce qu'**un premier échangeur de chaleur (24) est disposé en aval du filtre à adsorption (13), dans le conduit d'adsorption (22),
- **en ce qu'**il est prévu un turbocompresseur à gaz d'échappement (30) qui est entrainé par le flux de gaz d'échappement dans le collecteur de gaz d'échappement (12) et comprime l'air frais fourni dans la conduite d'alimentation d'air (11) du moteur à combustion interne,
- **en ce que** le turbocompresseur à gaz d'échappement (30), en outre, est disposé dans le collecteur de gaz d'échappement (12), en aval du filtre à adsorption (13), et le conduit de désorption (19) débouche dans la conduite d'alimentation d'air du moteur à combustion interne, en aval du turbocompresseur à gaz d'échappement (30), et
- **en ce qu'**un deuxième échangeur de chaleur (25) est disposé dans le conduit de désorption (19).

2. Dispositif d'épuration des gaz d'échappement selon la revendication 1, **caractérisé en ce que** le conduit de désorption (19) est conçu comme une conduite de recyclage des gaz d'échappement (20).

3. Dispositif d'épuration des gaz d'échappement selon la revendication 1 ou 2, **caractérisé en ce qu'**un catalyseur de gaz d'échappement (17) est disposé dans le collecteur de gaz d'échappement (12), en amont du filtre à adsorption (13).

4. Dispositif d'épuration des gaz d'échappement selon l'une quelconque des revendications 1 à 3, **caractérisé en ce qu'**un catalyseur de gaz d'échappement (16) est disposé dans le collecteur de gaz d'échappement (12), en aval du filtre à adsorption (13).

5. Dispositif d'épuration des gaz d'échappement selon l'une quelconque des revendications précédentes, **caractérisé en ce que** le premier volet de commande (27) est disposé en amont du filtre à adsorption (13).

6. Dispositif d'épuration des gaz d'échappement selon l'une quelconque des revendications précédentes, **caractérisé en ce que** le conduit de désorption (19), qui est configuré aussi, de préférence, comme une conduite de recyclage des gaz d'échappement (20), bifurque dans le conduit d'adsorption (22), entre le premier volet de commande (27) et le filtre à adsorption (13).

7. Dispositif d'épuration des gaz d'échappement selon l'une quelconque des revendications précédentes, **caractérisé en ce que** le premier volet de commande (27) présente des positions de commande dans lesquelles ledit volet de commande obture le conduit de désorption (19), en particulier la conduite de recyclage des gaz d'échappement (20).

8. Dispositif d'épuration des gaz d'échappement selon l'une quelconque des revendications précédentes, **caractérisé en ce que** le premier volet de commande (27) sert, au cours du fonctionnement en désorption, à la régulation du flux gazeux s'écoulant à travers le filtre à adsorption.

9. Dispositif d'épuration des gaz d'échappement selon l'une quelconque des revendications précédentes, **caractérisé en ce qu'**il est prévu une conduite de recyclage des gaz d'échappement (20), où le débit volumique du flux gazeux recyclé est régulé au moyen d'un deuxième volet de commande (28), où le conduit de désorption (19) débouche dans la conduite de recyclage des gaz d'échappement (20) ou est conçue comme une telle conduite de recyclage.

10. Système d'épuration des gaz d'échappement selon l'une quelconque des revendications précédentes, **caractérisé en ce qu'**un refroidisseur d'air de suralimentation (26) est disposé dans la conduite d'alimentation d'air (11), en aval du turbocompresseur à gaz d'échappement (30).

11. Système d'épuration des gaz d'échappement selon l'une quelconque des revendications précédentes, **caractérisé en ce que** le conduit de désorption (19) débouche dans la conduite d'alimentation d'air (11), en amont du refroidisseur d'air de suralimentation (26).

12. Dispositif d'épuration des gaz d'échappement selon l'une quelconque des revendications précédentes, **caractérisé en ce que** le conduit de désorption (19) débouche dans la conduite d'alimentation d'air (11), en aval du refroidisseur d'air de suralimentation (26).

13. Dispositif d'épuration des gaz d'échappement selon l'une quelconque des revendications précédentes, **caractérisé en ce qu'**un refroidisseur d'air de suralimentation (26) est disposé dans la conduite d'alimentation d'air (11), en aval du turbocompresseur à gaz d'échappement (30).

14. Dispositif d'épuration des gaz d'échappement selon l'une quelconque des revendications précédentes, **caractérisé en ce que** le filtre à adsorption (13) est disposé dans le collecteur de gaz d'échappement (12), en amont d'un silencieux (31).

15. Dispositif d'épuration des gaz d'échappement selon l'une quelconque des revendications précédentes, **caractérisé en ce que** le filtre à adsorption (13) est disposé dans le collecteur de gaz d'échappement, en aval d'un silencieux (31).

16. Dispositif d'épuration des gaz d'échappement selon l'une quelconque des revendications précédentes, **caractérisé en ce qu'**il est prévu un conduit de désorption distinct (19) qui bifurque par rapport au filtre à adsorption (13) et débouche dans un tube de Venturi (18) ou dans un éjecteur placé dans une conduite de recyclage des gaz d'échappement (20), où la conduite de recyclage des gaz d'échappement (20) bifurque par rapport au collecteur de gaz d'échappement (12), en amont du turbocompresseur à gaz d'échappement (30), et débouche dans la conduite d'alimentation d'air (11), en aval du turbocompresseur à gaz d'échappement (30) et, en particulier, en aval d'un refroidisseur d'air de suralimentation (26), où au moins l'un des éléments d'un deuxième volet de commande (28) et d'un deuxième échangeur de chaleur (25) est disposé, de préférence, en amont du débouché du conduit de désorption (19), dans la conduite de recyclage des gaz d'échappement.

17. Procédé de traitement des gaz d'échappement d'un moteur à combustion interne, où les gaz d'échappement du moteur à combustion interne (10) traversent un catalyseur de gaz d'échappement (16) et au moins un filtre à adsorption (13), au cours du fonctionnement lors d'un démarrage à froid, ledit traitement étant effectué avec un dispositif d'épuration des gaz d'échappement selon au moins l'une quelconque des revendications précédentes, **caractérisé en ce qu'**un flux gazeux de gaz d'échappement du moteur à combustion interne est recyclé dans le moteur à combustion interne, la désorption du filtre à adsorption (13) étant réalisée par ce flux gazeux.

18. Procédé selon la revendication (19), **caractérisé en ce qu'**un refroidissement du flux gazeux se produit au moyen d'un premier échangeur de chaleur (24), au cours du fonctionnement en désorption, avant le passage à travers le filtre à adsorption (13).

19. Procédé selon l'une quelconque des revendications précédentes, **caractérisé en ce que** le fonctionnement en désorption commence lorsque les gaz d'échappement ont atteint une température qui se situe entre la température de démarrage du catalyseur et la température d'une désorption du filtre à adsorption qui commence.
